# EUROPEAN PATENT APPLICATION

(11) **EP 4 563 853 A1**
(43) Date of publication of application: **04.06.2025**
(21) Application number: 23846133.9
(22) Date of filing: 30.06.2023
(51) Int. Cl.: F16K 11/087, F16K 11/22, F16K 27/00

(54) **FLOW PATH SWITCHING VALVE**

(30) Priority: 28.07.2022 JP 2022120888
(71) Applicant: Fujikoki Corporation, Tokyo 158-0082 (JP)
(72) Inventor: KONDO, Daisuke, Tokyo 158-0082 (JP); HARA, Seiichi, Tokyo 158-0082 (JP); MOCHIZUKI, Kenichi, Tokyo 158-0082 (JP); HARADA, Takao, Tokyo 158-0082 (JP)
(74) Representative: Ter Meer Steinmeister & Partner
(86) International application number: PCT/JP2023/024521
(87) International publication number: WO 2024/024400

(57) **Abstract**

A flow path switching valve includes: a valve unit including a valve main body wherein a first port and a second port through which a fluid respectively flows in and out are formed on a wall surface forming a valve chamber, and a third port is formed on a bottom surface of the valve chamber, a valve body disposed rotatably in the valve chamber, and in which a flow path is formed, a first flow path communicated with the first port, a second flow path provided alongside the first flow path with the valve main body interposed between the first flow path and the second flow path, and communicated with the second port, and a third flow path communicated with the third port and which is open on a side opposite to the third port; and a rotation drive part connected to the valve unit and which rotates the valve body. At an opposite side from the rotation drive part of one valve unit, another valve unit is stackable and connectable.

## Description

### Technical Field

The present disclosure relates to a flow path switching valve.

### Background Art

Specification of Chinese Patent Application Publication No. 111828682 discloses a control valve (flow path switching valve) having a valve body that rotates in a valve main body and having five or more ports (pipe joints).

### SUMMARY OF INVENTION

### Technical Problem

However, in the above-described conventional example, since the number of coupling ports and a combination of flow paths are fixed according to a specification, there is no degree of freedom, and it is considered that it is necessary to start over from the design when the specification changes.

An object of the disclosure is to easily realize flow path switching valves of various specifications.

### Solution to Problem

According to a first aspect, there is provided a flow path switching valve including: a valve unit including a valve main body wherein a valve chamber is formed at an interior thereof, a first port and a second port through which a fluid respectively flows in and out are formed on a wall surface forming the valve chamber, and a third port is formed on a bottom surface of the valve chamber, a valve body disposed rotatably in the valve chamber, and in which a flow path is formed, a first flow path communicated with the first port, a second flow path provided alongside the first flow path with the valve main body interposed between the first flow path and the second flow path, and communicated with the second port, and a third flow path communicated with the third port and open at an opposite side from the third port; and a rotation drive part connected to the valve unit and rotating the valve body such that a communication state of the first port, the second port, and the third port is switched by means of the flow path of the valve body, wherein at an opposite side from the rotation drive part of one valve unit, another valve unit is stackable and connectable.

In the flow path switching valve, a degree of freedom in combining valve units can be increased by stacking and connecting the other valve unit to the side opposite to the rotation drive part of the one valve unit.

According to a second aspect, in the flow path switching valve according to the first aspect, a portion of the one valve unit at which the other valve unit is stacked includes a lid that closes the valve chamber of the other valve unit.

In the flow path switching valve, since the portion of the one valve unit at which the other valve unit is stacked includes the lid that closes the valve chamber of the other valve unit, when one valve unit and another valve unit are stacked, another component for closing the valve chamber of the other valve unit is unnecessary. Therefore, it is possible to suppress an increase in the number of components and to increase workability when the valve units are stacked and connected.

According to a third aspect, in the flow path switching valve according to the first aspect or the second aspect, the other valve unit is stacked at and connected to the one valve unit, and the two valve bodies in the two valve units are rotated by one rotation drive part.

In the flow path switching valve, since the two valve bodies in the two stacking valve units are rotated by the one rotation drive part, the number of components and the cost can be reduced as compared with a case in which the rotation drive parts are respectively provided in the two valve units.

According to a fourth aspect, in the flow path switching valve according to any one of the first aspect to the third aspect, a center-to-center distance between an end of the first flow path and an end of the second flow path in the one valve unit is equal to a center-to-center distance between the ends of the first flow path in an stacking direction in a state in which the other valve unit is stacked at and connected to the one valve unit.

In the flow path switching valve, when the other two stacked valve units are connected and coupled in the direction of the first flow path and the second flow path of the two stacked valve units, not only the first flow paths and the second flow paths can be coupled, but also the first flow path and the second flow path can be coupled. Therefore, the degree of freedom in combining the valve units can be further increased.

According to a flow path switching valve according to a fifth aspect, in the flow path switching valve according to any one of the first aspect to the fourth aspect, the first flow path and the second flow path of the other valve unit are respectively connectable and couplable to the first flow path and the second flow path of the valve unit.

In the flow path switching valve, by rotating the valve body by the rotation drive part, the communication state of the first port, the second port, and the third port of the valve chamber can be switched by means of the flow path of the valve body. Since the first flow path and the second flow path of one valve unit can be respectively connected and coupled to the first flow path and the second flow path of the other valve unit, it is possible to easily realize flow path switching valves of various specifications by combining the valve units.

According to a sixth aspect, in the flow path switching valve according to any one of the first aspect to the fifth aspect, a female joint is provided at one end of each of the first flow path and the second flow path, and a male joint having a structure that is connectable to the female joint is provided at another end of each of the first flow path and the second flow path.

In the flow path switching valve, the female joint is provided at the one end of each of the first flow path and the second flow path, and the male joint having the structure that is connectable to the female joint is provided at the another end of each of the first flow path and the second flow path. Therefore, for example, the first flow paths and the second flow paths of the one valve unit and the other valve unit can be easily coupled to each other.

According to a seventh aspect, in the flow path switching valve according to any one of the first aspect to the sixth aspect, the third flow path has a bent part, and a spherical concave part is provided in a portion of the bent part facing the third port.

The fluid flowing into the third flow path from the valve chamber through the third port passes through the bent part. In the flow path switching valve, since the spherical concave part is provided at the portion of the bent part of the third flow path, facing the third port, resistance of the fluid is reduced as compared with a configuration in which the concave part is not provided at the portion and simply bent. Therefore, a pressure loss in the third flow path can be suppressed.

According to an eighth aspect, in the flow path switching valve according to any one of the first aspect to the seventh aspect, a rib extending in a direction toward the third port is formed in the flow path of the valve body.

In the flow path switching valve, since the rib extending in the direction toward the third port is formed in the flow path of the valve body, the fluid flowing in the valve body can be rectified. A direction of the valve body can be easily adjusted by applying a force to the rib at the time of assembling the valve body in the valve chamber.

According to a ninth aspect, in the flow path switching valve according to any one of the first aspect to the eighth aspect, a first protrusion part protruding from the first port side toward an interior of the first flow path is provided at a connection part with the first port in the first flow path, and a second protrusion part protruding from the second port side toward an interior of the second flow path is provided at a connection part with the second port in the second flow path.

In the flow path switching valve, since the first protrusion part is provided at the connection part with the first port of the valve chamber in the first flow path, the fluid flowing through the first flow path can be guided to the first port. Since the second protrusion part is provided at the connection part with the second port of the valve chamber in the second flow path, the fluid flowing through the second flow path can be guided to the second port. In this way, an inflow of the fluid from the first flow path and the second flow path to the valve chamber can be promoted.

According to a tenth aspect, in the flow path switching valve according to any one of the first aspect to the ninth aspect, a sub flow path is provided at a position facing the first port in the first flow path, and a storage tank is connectable to the sub flow path.

According to an eleventh aspect, in the flow path switching valve according to any one of the first aspect to the tenth aspect, a pump is attachable to each of the first flow path and the second flow path.

According to a twelfth aspect, in the flow path switching valve according to the seventh aspect, a through-hole is formed at a bottom of the concave part, and the through-hole is closed by a closing part including a temperature sensor.

### Advantageous Effects of Invention

According to the disclosure, it is possible to easily realize flow path switching valves of various specifications.

### BRIEF DESCRIPTION OF DRAWINGS

Fig. 1 is a perspective view illustrating an overall configuration of a flow path switching valve according to an embodiment of the disclosure.
Fig. 2 is a perspective view illustrating an example in which a storage tank is attached to the flow path switching valve.
Fig. 3 is a perspective view illustrating an example in which the storage tank and a pump are attached to the flow path switching valve.
Fig. 4 is a partially broken perspective view illustrating a flow path switching valve in which two valve units are stacked and two valve bodies are rotated by one rotation drive part.
Fig. 5 is a partially broken perspective view illustrating a valve unit.
Fig. 6 is a partially broken perspective view illustrating the valve unit.
Fig. 7 is a front view illustrating a state in which the valve unit is viewed from a male joint side of a first flow path.
Fig. 8 is a partial sectional view illustrating a state in which the valve unit is viewed from an opening side of a third flow path and a second flow path is cut in a radial direction.
Fig. 9 is a front view illustrating a valve body.
Fig. 10 is a bottom view illustrating the valve body.

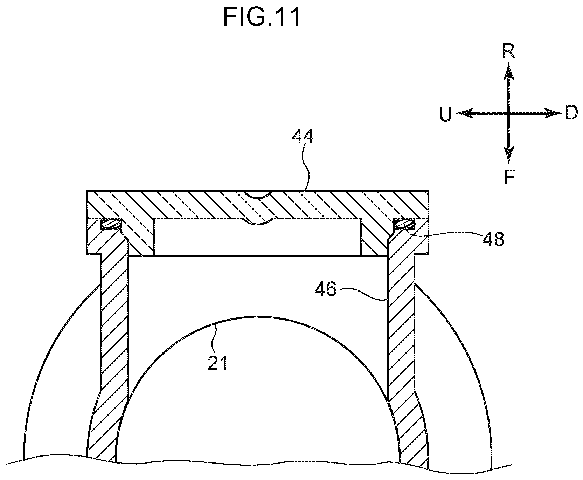

Fig. 11 is an enlarged sectional view illustrating a state in which an opening part provided in a middle of the first flow path is closed by a lid member.
Fig. 12 is a sectional view illustrating a configuration in which, in a flow path switching valve in which two valve units are stacked, a portion of one valve unit stacking another valve unit is a lid that closes a valve chamber of the other valve unit.
Fig. 13 is a sectional view illustrating a flow path switching valve according to a first modification.
Fig. 14 is a sectional view illustrating the flow path switching valve according to the first modification.
Fig. 15 is a perspective view illustrating a flow path switching valve according to a second modification.
Fig. 16 is a perspective view illustrating the flow path switching valve according to the second modification.
Fig. 17 is a partially broken perspective view illustrating a flow path switching valve according to a third modification.
Fig. 18 is a perspective view illustrating a flow path switching valve according to a fourth modification.
Fig. 19 is a block view illustrating one switching mode of the flow path switching valve according to the fourth modification.
Fig. 20 is a block view illustrating the other switching mode of the flow path switching valve according to the fourth modification.
Fig. 21 is a perspective view illustrating a flow path switching valve according to a fifth modification.
Fig. 22 is a block view illustrating one switching mode of the flow path switching valve according to the fifth modification.
Fig. 23 is a block view illustrating the other switching mode of the flow path switching valve according to the fifth modification.
Fig. 24 is a perspective view illustrating a flow path switching valve according to a sixth modification.
Fig. 25 is a block view illustrating one switching mode of the flow path switching valve according to the sixth modification.
Fig. 26 is a block view illustrating the other switching mode of the flow path switching valve according to the sixth modification.
Fig. 27 is a perspective view illustrating a flow path switching valve according to a seventh modification.

### DESCRIPTION OF EMBODIMENTS

Hereinafter, modes for carrying out the disclosure will be described with reference to the drawings. In the drawings, components denoted by the same reference numerals mean the same or similar components. Overlapping descriptions and reference numerals in the embodiments described below may be omitted. The drawings used in the following description are all schematic, and dimensional relationships of respective elements, ratios of respective elements, and the like illustrated in the drawings do not necessarily coincide with actual ones. Dimensional relationships of the respective elements, ratios of the respective elements, and the like do not necessarily coincide among the plurality of drawings.

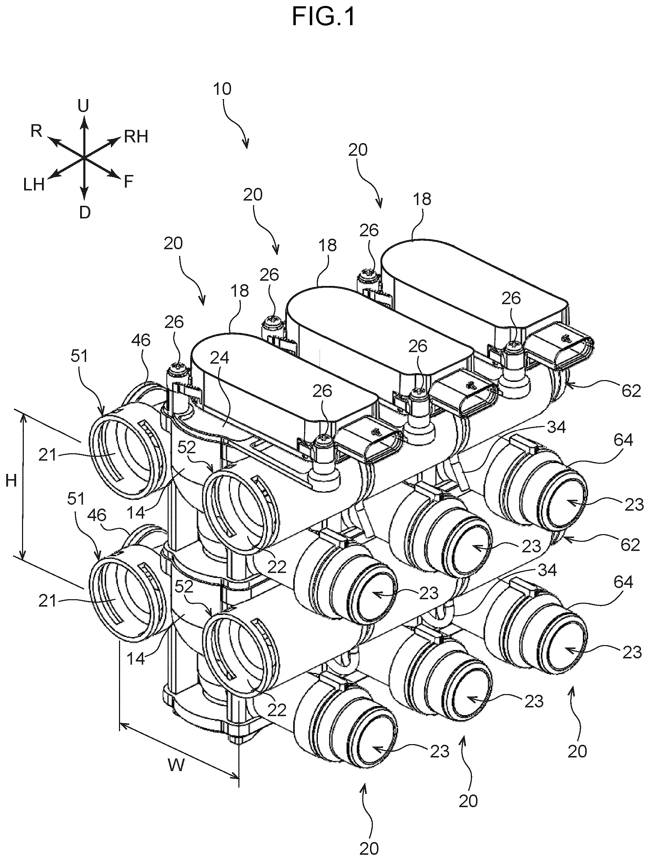

In the present specification, the description representing a position and direction such as up and down, left and right, front and back, and the like is based on the direction arrow display of Fig. 1, and does not refer to the position and direction in the actual use state. In Fig. 1, "U" indicates an upward direction (upper side), "D" indicates a downward direction (lower side), "LH" indicates a left direction (left side), "RH" indicates a right direction (right side), "F" indicates a front direction (front side), and "R" indicates a rear direction (rear side). An "up-down direction" means a direction of an arrow U and a direction of an arrow D. A "left-right direction" means a direction of an arrow LH and a direction of an arrow RH. A "front-rear direction" means a direction of an arrow F and a direction of an arrow R.

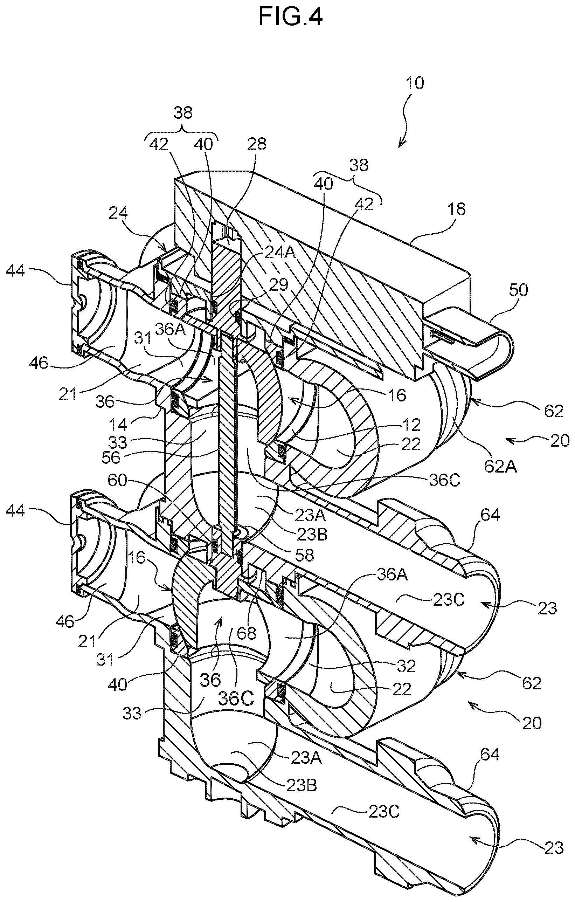

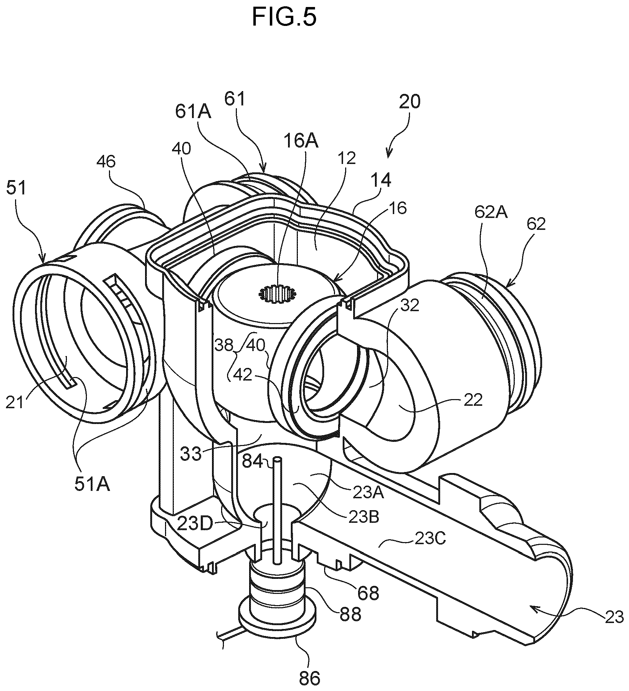

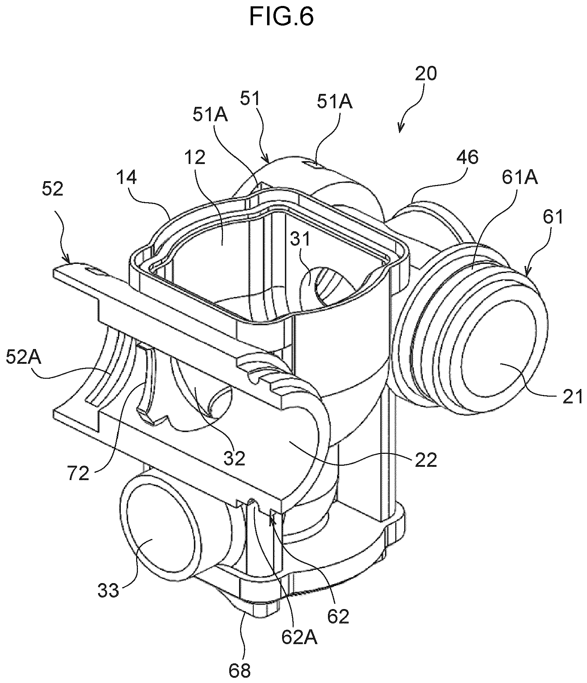

Fig. 1 is a perspective view illustrating an overall configuration of a flow path switching valve 10 according to an embodiment of the disclosure. In the flow path switching valve 10, three valve units 20 are connected in the left-right direction, and the other valve units 20 are respectively stacked on the lower side of each valve unit 20. That is, six valve units 20 are combined. Fig. 4 is a partially broken perspective view illustrating a flow path switching valve in which two valve units 20 are stacked and two valve bodies are rotated by one rotation drive part. Fig. 4 corresponds to an example in which two upper and lower valve units 20 are extracted from Fig. 1. Figs. 5 and 6 are partially broken perspective views illustrating one valve unit 20.

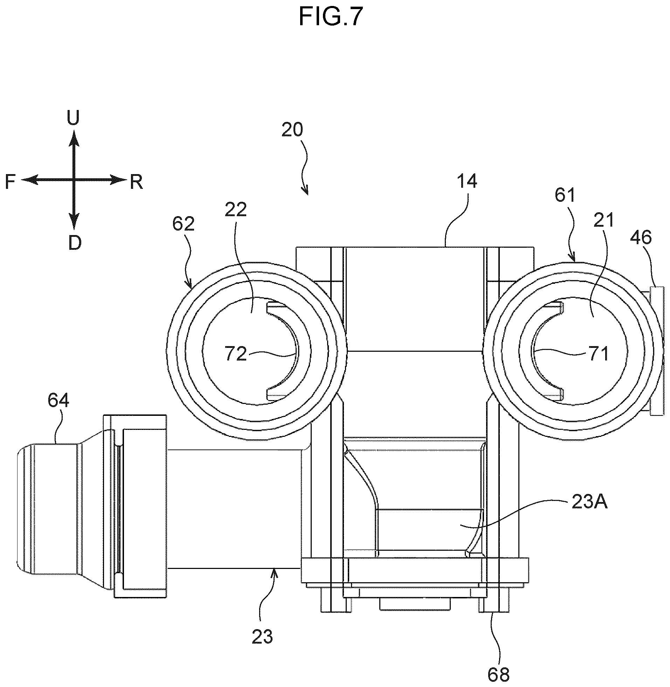

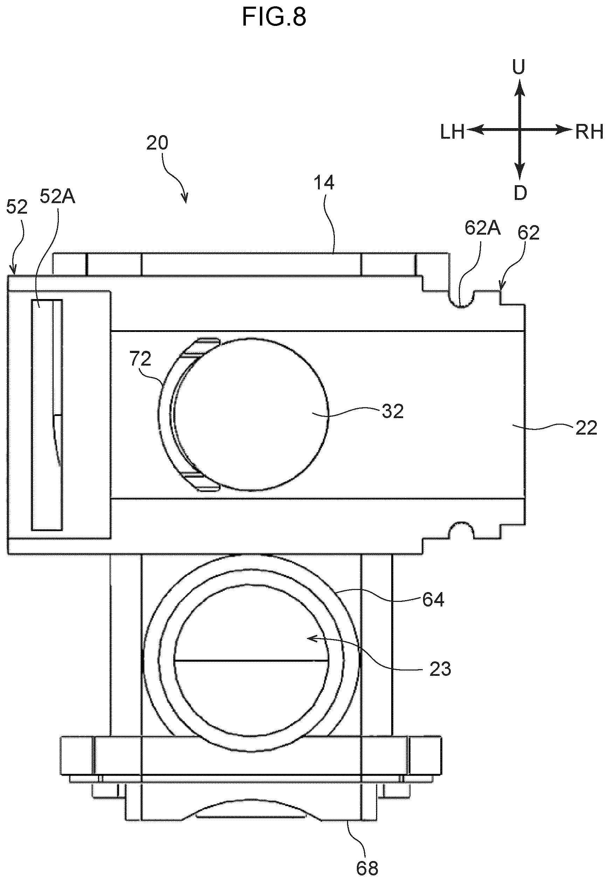

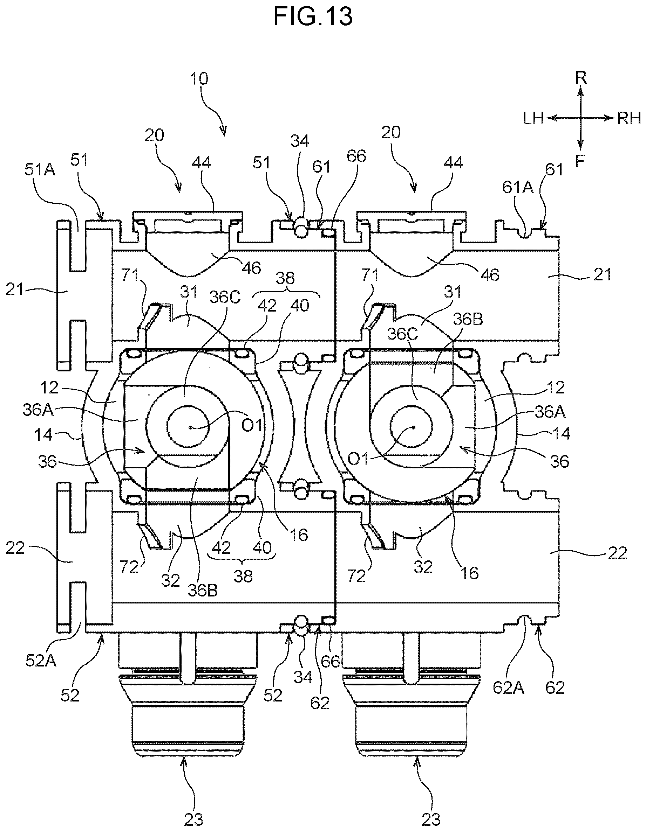

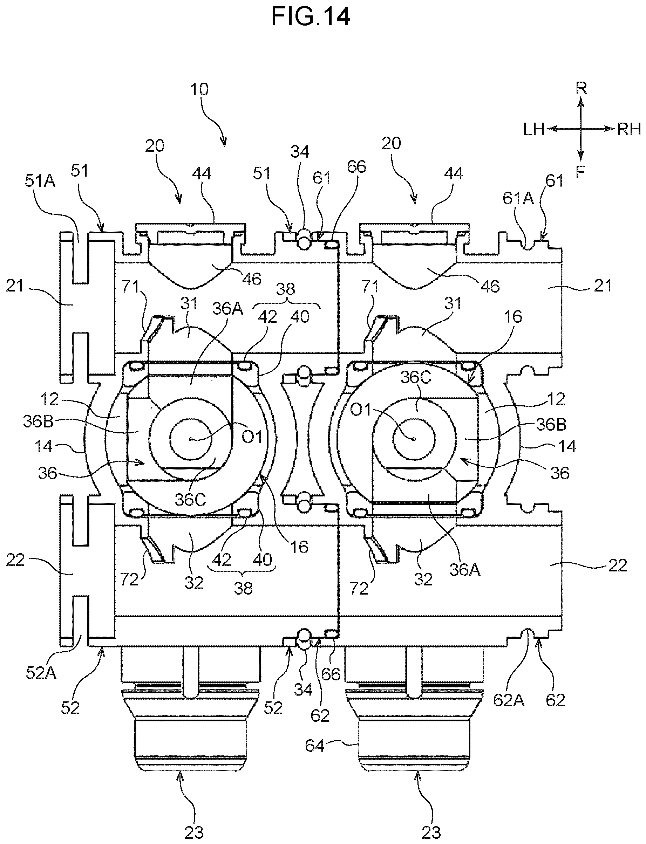

The flow path switching valve 10 is used as, for example, a rotary three-way valve (Fig. 5) or a four-way valve (Fig. 13 and Fig. 14) that switches a flow path of a fluid flowing in an engine room or the like of an automobile. As illustrated in Figs. 4 to 8, the flow path switching valve 10 has the valve unit 20 and a rotation drive part 18.

### [Valve Unit]

The valve unit 20 includes a valve main body 14, a valve body 16, a first flow path 21, a second flow path 22, and a third flow path 23. In the example illustrated in Fig. 5, the valve unit 20 is, for example, a three-way valve that switches between a state in which the first flow path 21 and the third flow path 23 communicate with each other, a state in which the second flow path 22 and the third flow path 23 communicate with each other, and a state in which the first flow path 21, the second flow path 22, and the third flow path 23 do not communicate with each other.

### (Valve Main Body)

In Fig. 6, the valve main body 14 is made of, for example, a synthetic resin, and a valve chamber 12 is formed at an interior therof. An upper direction of the valve chamber 12 is opened, and the valve body 16 and a sealing part 38 to be described later are inserted from the upper direction. On a wall surface forming the valve chamber 12, for example, a first port 31 and a second port 32 which face each other and through which a fluid respectively flows in and out are formed. As an example, the first port 31 is formed on a rear wall surface of the valve chamber 12, and the second port 32 is formed on a front wall surface of the valve chamber 12. That is, the first port 31 and the second port 32 face each other in the front-rear direction of the valve chamber 12. A third port 33 is formed on a bottom surface of the valve chamber 12.

### (Valve Body)

In Figs. 4, 5, 9, and 10, the valve body 16 is a ball-shaped member made of, for example, a synthetic resin, and is rotatably disposed in the valve chamber 12. An insertion hole 16A into which a valve shaft 28 in the rotation drive part 18 is inserted is formed in an upper part of the valve body 16. The valve shaft 28 and the insertion hole 16A are engaged with each other around an axial direction of the valve shaft 28, and the rotation of the valve shaft 28 is transmitted to the valve body 16. The insertion hole 16A penetrates, for example, to a flow path 36 of the valve body 16.

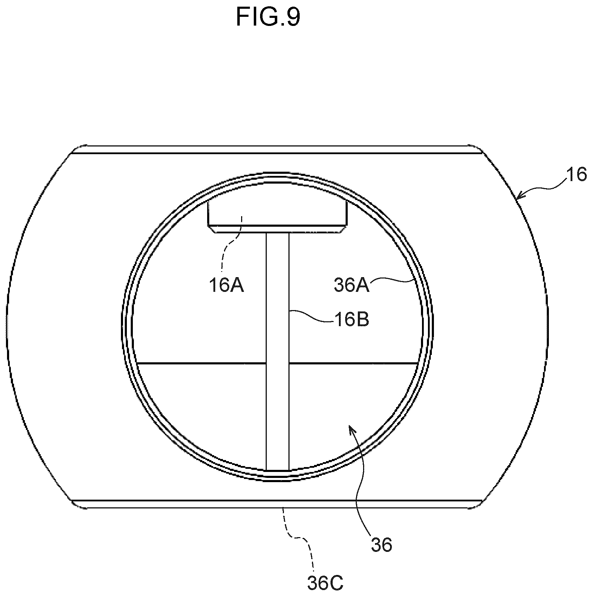

In order to allow the first port 31, the second port 32, and the third port 33 of the valve main body 14 to selectively communicate with each other, for example, in other words, in order to switch the communication state of the first port 31, the second port 32, and the third port 33, the flow path (internal flow path) 36 is provided at an interior of the valve body 16. Specifically, as illustrated in Fig. 9, a lateral hole 36A leading from an outer periphery (side part) to the flow path 36 is formed in the valve body 16. A pilot hole 36C leading from an outer periphery (lower part) to the flow path 36 is formed in the valve body 16. The flow path 36 communicates from the lateral hole 36A to the pilot hole 36C. According to the state of the valve body 16, the lateral hole 36A can face the first port 31 or the second port 32. In any of the ports, in a state in which the lateral hole 36A does not face, the valve body 16 is in close contact with a seat member 40 described later and is closed.

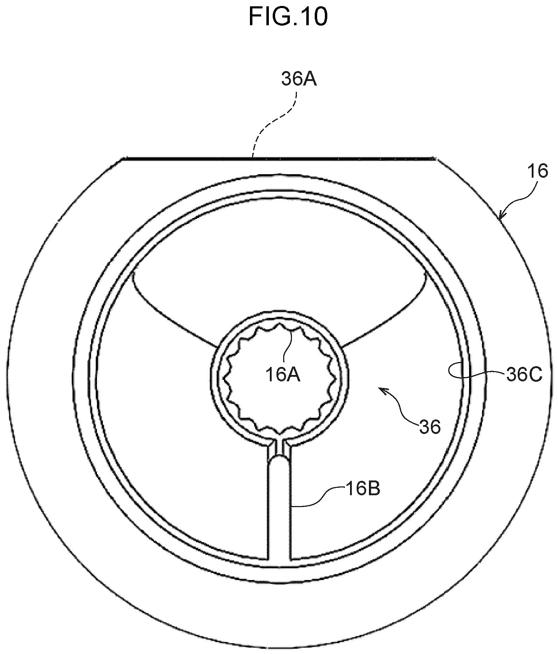

As illustrated in Figs. 9 and 10, a rib 16B extending in a direction (up-down direction) toward the third port 33 is formed in the flow path 36 of the valve body 16. The rib 16B is, for example, a thin plate-shaped protrusion, and is formed, for example, on an inner wall on a far side of the lateral hole 36A in the flow path 36 of the valve body 16.

In Figs. 4 and 5, sealing parts 38 for sealing between the valve body 16 and each of the first port 31 and the second port 32 are respectively provided. The sealing part 38 has, for example, a seat member 40 and an O-ring 42. The seat member 40 is made of, for example, a synthetic resin, and is formed in an annular shape having openings corresponding to the first port 31 and the second port 32. The seat members 40 are respectively disposed around the first port 31 and the second port 32 on an inner wall surface (front and rear wall surfaces of the valve chamber 12) of the valve main body 14. The valve body 16 is sandwiched between the two seat members 40, and is disposed so as to be rotatable and slidable while being in contact with each of the seat members 40.

A space between the seat member 40 and the valve main body 14 is sealed by the O-ring 42, for example, airtightly and watertightly. The O-ring 42 is attached to, for example, an O-ring groove (not illustrated) formed in the seat member 40.

As an example, polyphenylene sulfide (PPS) can be used for the valve main body 14 and the valve body 16, fluororesin (PTFE) can be used for the seat member 40, and synthetic rubber can be used for the O-ring 42.

### (Rotation Drive Part)

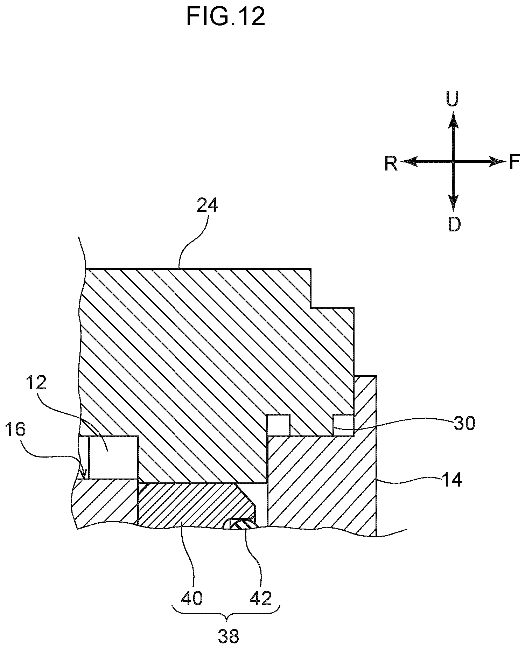

In Fig. 4, the rotation drive part 18 is a device that is connected to the valve unit 20 and rotates the valve body 16 such that the communication state of the first port 31, the second port 32, and the third port 33 is switched by means of the flow path of the valve body 16. The rotation drive part 18 is disposed above the valve main body 14 in the upper valve unit 20. Specifically, for example, a bracket 24 is fixed onto the upper valve main body 14, and the rotation drive part 18 is fixed onto the bracket 24 using, for example, a screw 26 (Fig. 1). An upward opening (Fig. 5) in the valve chamber 12 of the upper valve main body 14 is closed by, for example, the bracket 24 (Fig. 12). In other words, the bracket 24 has a shape that closes the opening of the valve chamber 12. The bracket 24 is welded to the inside of the opening of the valve chamber 12 in a state of being inlay fitted. The bracket 24 is provided with a convex part 30. The convex part 30 faces or abuts on an edge around the valve chamber 12 in the valve main body 14. The convex part 30 may be a melting margin. The convex part 30 may be provided on the valve main body 14 instead of the bracket 24.

The rotation drive part 18 is, for example, a geared motor. The rotation drive part 18 is provided with, for example, a connector 50 to which wiring for communication with a control unit and power supply is coupled. The valve shaft 28 as an output shaft is coupled to the rotation drive part 18. The valve shaft 28 is inserted through a through-hole 24A formed in the bracket 24. An O-ring 29 or an X-ring (not illustrated) is attached to the valve shaft 28. The O-ring 29 ensures watertightness between the valve shaft 28 and the through-hole 24A. A lower end of the valve shaft 28 is inserted into the insertion hole 16A (Fig. 5) of the valve body 16.

### (First Flow Path, Second Flow Path, And Third Flow Path)

In Figs. 4 to 6, the first flow path 21, the second flow path 22, and the third flow path 23 are, for example, pipe parts integrally configured with the valve main body 14. In other words, the first flow path 21 is a first port, the second flow path 22 is a second port, and the third flow path 23 is a third port.

The first flow path 21 is open at both ends, for example, and communicates with the first port 31 of the valve chamber 12. The first flow path 21 linearly extends, for example, in the left-right direction. The first port 31 is coupled to the middle of the first flow path 21. As a result, the first flow path 21 and the first port 31 are formed in a substantially T shape in plan view (see Figs. 13 and 14).

The second flow path 22 is provided alongside the first flow path 21 with the valve main body 14 interposed therebetween, and has, for example, both ends opened and communicates with the second port 32. The second flow path 22 linearly extends, for example, in the left-right direction. The second port 32 is coupled to the middle of the second flow path 22. As a result, the second flow path 22 and the second port 32 are formed in a substantially T shape in plan view (see Figs. 13 and 14).

As illustrated in Fig. 1, female joints 51 and 52 are respectively provided at one ends of the first flow path 21 and the second flow path 22. As illustrated in Figs. 5 and 6, male joints 61 and 62 are respectively provided at the other ends of the first flow path 21 and the second flow path 22. The male joints 61 and 62 are configured to be able to be coupled to the female joints 51 and 52. Annular grooves 61A and 62A are formed on the outer peripheries of the male joints 61 and 62. For example, a pair of arc-shaped slits 51A and 52A are formed in the female joints 51 and 52. As illustrated in Figs. 13 and 14, the male joints 61 and 62 are respectively fitted into the female joints 51 and 52, and are prevented from coming off by fitting clips 34 into the grooves 61A and 62A through the slits 51A and 52A. The water-tightening of the coupling portion of each joint is performed by, for example, an O-ring 66. With such a joint structure, the first flow path 21 and the second flow path 22 of one valve unit 20 can be respectively connected and coupled to the first flow path 21 and the second flow path 22 of another valve unit 20 (see Figs. 1, 13, and 14). The joint structure is an example, and any other joint structure can be used.

In Fig. 6 to 8, 13, and 14, a first protrusion part 71 protruding from the first port 31 side toward an interior of the first flow path 21 is provided at a connection part with the first port 31 in the first flow path 21. The first protrusion part 71 is, for example, an arc-shaped projection formed along the opening of the first port 31 with respect to the first flow path 21. The range of the first protrusion part 71 is, for example, less than half the circumference of an inner peripheral surface of the first flow path 21 on the first port 31 side. One surface of the first protrusion part 71 in the left-right direction is a concave surface obtained by extending a part of an inner wall of the first flow path 21. In the illustrated example, the first protrusion part 71 is provided on the left side of the first port 31. The first protrusion part 71 may be provided on the right side of the first port 31, or may be provided on both left and right sides of the first protrusion part 71.

A second protrusion part 72 protruding from the second port 32 side toward an interior of the second flow path 22 is provided at a connection part with the second port 32 in the second flow path 22. The second protrusion part 72 is, for example, an arc-shaped projection formed along the opening of the second port 32 with respect to the second flow path 22. The range of the second protrusion part 72 is, for example, less than half the circumference of an inner peripheral surface of the second flow path 22 on the second port 32. One surface of the second protrusion part 72 in the left-right direction is a concave surface obtained by extending a part of an inner wall of second flow path 22. In the illustrated example, the second protrusion part 72 is provided on the left side of the second port 32. The second protrusion part 72 may be provided on the right side of the second port 32, or may be provided on both left and right sides of the second protrusion part 72.

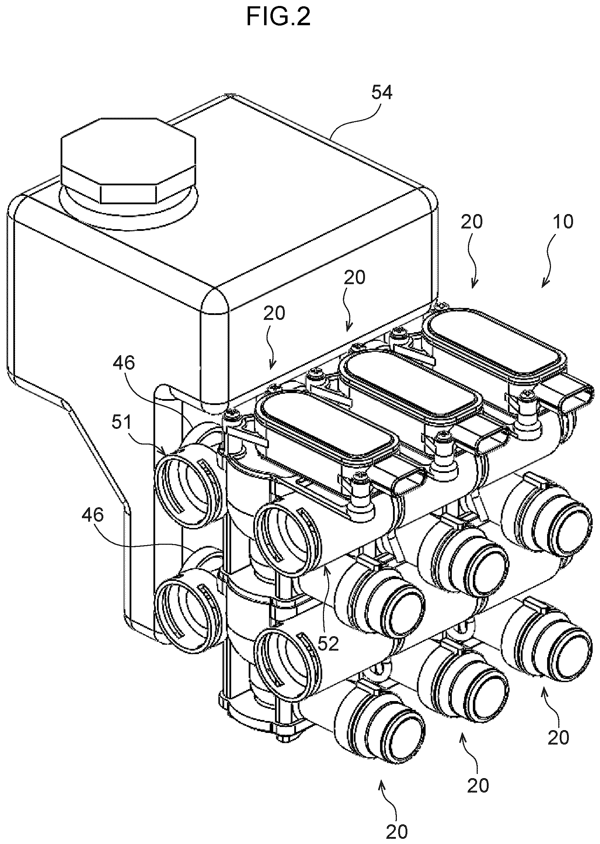

As illustrated in Figs. 1, 2, 4, and 9, for example, a sub flow path 46 closed by a lid body 44 may be provided at a position facing the first port 31 in the first flow path 21. A space between the lid body 44 and the end of the sub flow path 46 is sealed by welding or is water-tight by a sealing member such as an O-ring 48. The sub flow path 46 can also be used by removing the lid body 44. For example, a storage tank 54 is connectable to the sub flow path 46. When the valve unit 20 is vertically stacked, two sub flow paths 46 exist vertically. The two sub flow paths 46 is also connectable to the storage tank 54 provided with two coupling ports (Fig. 2). In this case, the storage tank 54 may have two storage chambers that correspond to the respective coupling ports and are partitioned from each other. As a result, fluids having different temperatures can be stored separately even in the same fluid.

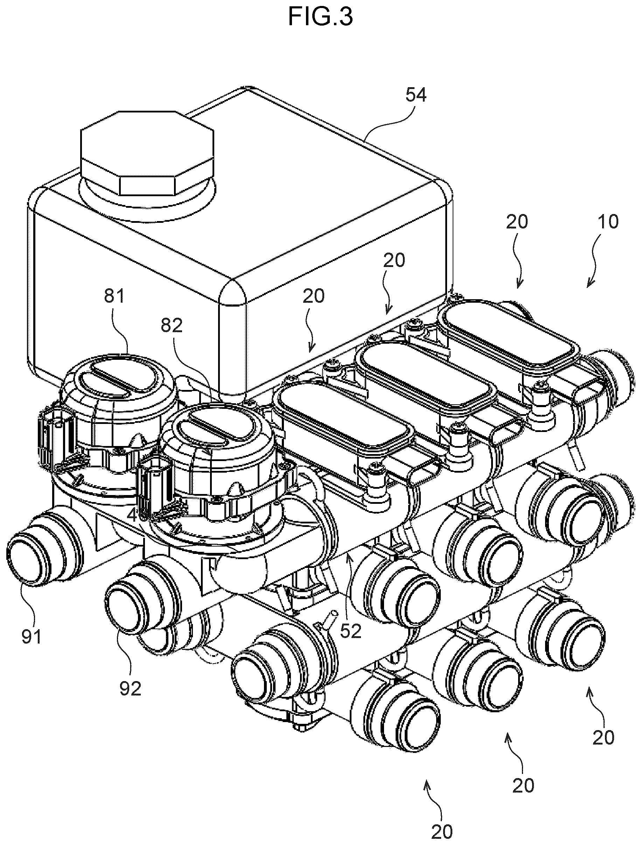

Pumps 81 and 82 can be respectively attached to the female joint 51 or the male joint 61 of the first flow path 21 at a terminal end of the flow path switching valve 10 and the female joint 52 or the female joint 62 of the second flow path 22 at a terminal end. In the example illustrated in Fig. 3, the pump 81 is attached to the female joint 51 (see Fig. 2) of the first flow path 21 in the upper valve unit 20. The pump 82 is attached to the female joint 52 of the second flow path 22 in the upper valve unit 20. The pump 81 has a joint 91 serving as a fluid port. The pump 82 also has a joint 92 serving as a fluid port. The pump 81 can supply a fluid from the other device to the first flow path 21 or supply a fluid in the first flow path 21 to the other device via the joint 91. The pump 82 can supply a fluid from the other device to the second flow path 22 or supply a fluid in the second flow path 22 to the other device via the joint 92.

In Figs. 4, 5, and 7, the third flow path 23 communicates with the third port 33, and the opposite side from the third port 33 is opened. Specifically, the third flow path 23 has a bent part 23A. The third port 33 is positioned above the bent part 23A. A terminal end of the third flow path 23 on the opening side is positioned, for example, in front of the bent part 23A, and protrudes, for example, forward of the second flow path 22. For example, a male joint 64 that is connectable to a pipe to the other device is provided at the terminal end of the third flow path 23 on the opening side.

As illustrated in Figs. 4 and 5, for example, a spherical concave part 23B is provided at a portion of the bent part 23A of the third flow path 23, facing the third port 33, that is, below the third port 33. The concave part 23B is formed in a substantially hemispherical shape. The concave part 23B is recessed downward from a bottom 23C of the lateral flow path on the front side of the bent part 23A. As a result, a part of the fluid entering the third flow path 23 from the third port 33 once falls into the concave part 23B and then enters the lateral flow path of the third flow path 23.

In the example illustrated in Fig. 5, a through-hole 23D is formed at a bottom of the concave part 23B. A valve shaft 58 can pass through the through-hole 23D (Fig. 4). A space between the valve shaft 58 and the through-hole 23D is water-tight by an O-ring 60. In a case in which the other valve unit is not stacked on the lower side, like the lower valve unit 20 in Fig. 4, for example, a structure without the through-hole 23D at the bottom of the concave part 23B is adopted. The through-hole 23D may be provided or may be closed by another member (for example, a closing part 86). For example, the closing part 86 may include a temperature sensor 84. The temperature sensor 84 is supported by, for example, the closing part 86, and is disposed such that a distal end thereof is positioned in the third flow path 23. For example, an O-ring 88 is attached to the closing part 86. The O-ring 88 ensures watertightness between the closing part 86 and the through-hole 23D. By using the temperature sensor 84, the temperature in the third flow path 23 can be accurately measured.

### [Stacking of Valve Units]

In Figs. 1 and 4, in the present embodiment, the other valve unit 20 can be stacked at and connected to the opposite side from the rotation drive part 18 of one valve unit 20. A portion of the upper valve unit 20 at which the lower valve unit 20 is stacked includes a lid 68 that closes the valve chamber 12 of the lower valve unit 20. The closing structure is substantially the same as the closing structure of the valve chamber 12 by the bracket 24 in Fig. 12, and a bottom part of the upper valve main body 14 is welded in a state of being inlay fitted to the inside of the opening of the valve chamber 12 in the lower valve main body 14.

As illustrated in Fig. 4, the other valve unit 20 may be stacked at and connected to one valve unit 20, and two valve bodies 16 in two valve units 20 may be rotated by one rotation drive part 18. In this example, the valve shaft 28 of the upper valve unit 20 and the valve shaft 58 of the lower valve unit 20 are connected by a connecting shaft 56. The connecting shaft 56 connects the upper and lower valve shafts 28 and 58 through the interior of the upper valve body 16 and the longitudinal flow path of the third flow path 23. When the upper valve shaft 28 is rotationally driven by the rotation drive part 18, the rotation is transmitted to the lower valve shaft 58 via the connecting shaft 56, and the upper and lower valve bodies 16 rotate in synchronization with each other.

The rotation drive parts 18 may be respectively provided in the upper and lower valve units 20, and the rotation control of the valve body 16 may be performed separately.

In Fig. 1, a center-to-center distance W between an end of the first flow path 21 and an end of the second flow path 22 in one valve unit 20 may be equal to a center-to-center distance H between the ends of the first flow path 21 in an stacking direction in a state in whick the other valve unit 20 is stacked at and connected to the one valve unit 20. That is, W = H may be satisfied.

### (Operation)

The present embodiment is configured as described above, and the operation thereof will be described below. In Fig. 4, in the flow path switching valve 10 according to the present embodiment, the communication state of the first port 31, the second port 32, and the third port 33 of the valve chamber 12 can be selectively switched, for example, by means of the flow path 36 of the valve body 16 by rotating the valve body 16 by the rotation drive part 18. Since the first port 31 and the second port 32 face each other with the valve chamber 12 interposed therebetween, and one lateral hole 36A is formed in the valve body 16, switching of the flow path can be performed by rotating the valve body 16 by 180°.

Since the first flow path 21 and the second flow path 22 of one valve unit 20 can be respectively connected and coupled to the first flow path 21 and the second flow path 22 of the other valve unit 20, it is possible to easily realize flow path switching valves of various specifications by combining the valve units 20. Specifically, the female joints 51 and 52 are respectively provided at one ends of the first flow path 21 and the second flow path 22, and the male joints 61 and 62 are respectively provided at the other ends of the first flow path 21 and the second flow path 22. The male joints 61 and 62 can be respectively coupled to the female joints 51 and 52. Therefore, for example, the first flow paths 21 and the second flow paths 22 of one valve unit 20 and the other valve unit 20 can be easily coupled to each other.

In Fig. 1, for example, when W = H, in a case in which the other two stacked valve units 20 are connected and coupled in the direction of the first flow path 21 and the second flow path 22 of the two stacked valve units 20, not only the first flow paths 21 and the second flow paths 22 are coupled, but also the first flow path 21 and the second flow path 22 can be coupled. That is, the two valve units 20 can be coupled to each other by being rotated by 90°. Therefore, the degree of freedom in combining the valve units 20 can be further increased.

The fluid flowing from the valve chamber 12 into the third flow path 23 through the third port 33 passes through the bent part 23A. In a case in which the spherical concave part 23B is provided in a portion of the bent part 23A of the third flow path 23, facing the third port 33, the resistance of the fluid is reduced as compared with a configuration in which the concave part 23B is not provided in the portion and simply bent. Therefore, a pressure loss in the third flow path 23 can be suppressed.

Furthermore, as illustrated in Figs. 9 and 10, when the rib 16B extending in the direction toward the third port 33 is formed in the flow path 36 of the valve body 16, the fluid flowing in the valve body 16 can be rectified. When the valve body 16 is assembled into the valve chamber 12, a direction of the valve body 16 can be easily adjusted by applying a force to the rib 16B.

As illustrated in Figs. 6 to 8, 13, and 14, when the first protrusion part 71 is provided at the connection part with the first port 31 of the valve chamber 12 in the first flow path 21, the flow of the fluid in the first flow path 21 is disturbed by the first protrusion part 71. As a result, the fluid flowing through the first flow path 21 can be guided to the first port 31. When the second protrusion part 72 is provided at the connection part with the second port 32 of the valve chamber 12 in the second flow path 22, the fluid flowing through the second flow path 22 can be guided to the second port 32 by disturbing the flow of the fluid in the second flow path 22 by the second protrusion part 72. In this way, an inflow of the fluid from the first flow path 21 and the second flow path 22 to the valve chamber 12 can be promoted.

Furthermore, as illustrated in Figs. 1 and 4, the other valve unit 20 can be stacked at and connected to the opposite side from to the rotation drive part 18 of one valve unit 20, such that the degree of freedom in combining the valve units 20 can be increased.

In a case in which a portion of one valve unit 20 at which another valve unit 20 is stacked includes the lid 68 that closes the valve chamber 12 of the other valve unit 20, when one valve unit 20 and another valve unit 20 are stacked, another component for closing the valve chamber 12 of the other valve unit 20 is unnecessary. Therefore, it is possible to suppress an increase in the number of components and to increase workability when the valve units 20 are stacked and connected.

In a case in which the two valve bodies 16 in the two stacked valve units 20 are rotated by one rotation drive part 18, the number of components and the cost can be reduced as compared with a case in which the rotation drive parts 18 are respectively provided in the two valve units 20.

As described above, according to the present embodiment, flow path switching valves of various specifications can be easily realized.

### (First Modification)

The valve unit 20 is not limited to the three-way valve, and may be, for example, a four-way valve as illustrated in Figs. 13 and 14. In this case, in the valve body 16, a lateral hole 36B joining from an outer periphery (side part) to the center of the lateral hole 36A is formed, for example, in a direction orthogonal to a rotation axis O1 of the valve body 16 and orthogonal to the lateral hole 36A. By rotating the valve body 16 by 90°, it is possible to switch between a state in which the first port 31 and the third port 33 communicate with each other and a state in which the second port 32 and the third port 33 communicate with each other.

### (Second Modification)

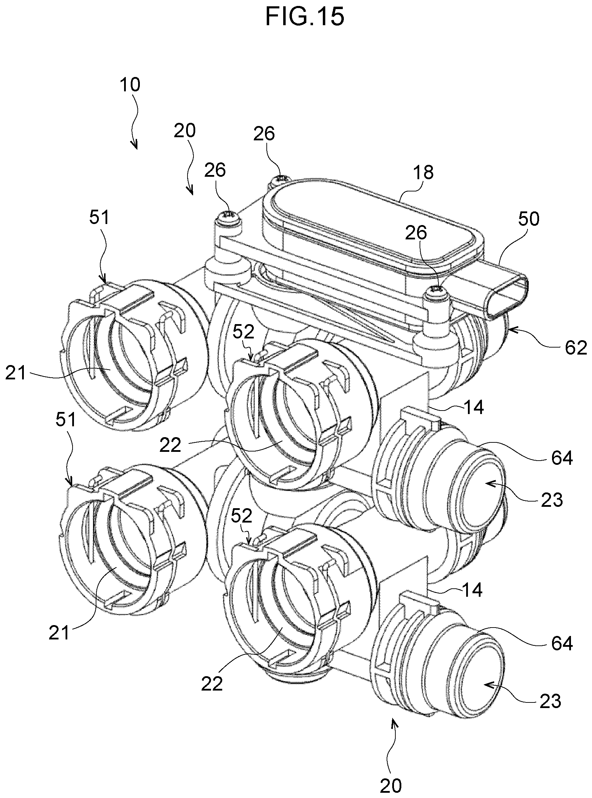

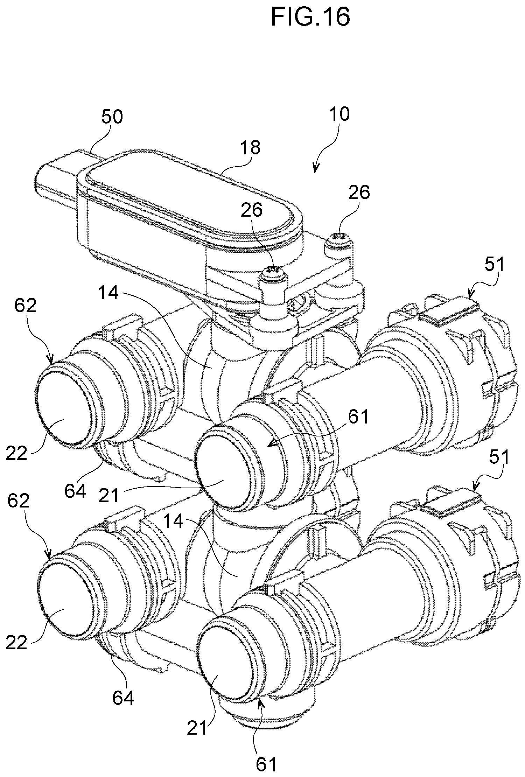

In Figs. 15 and 16, in a flow path switching valve 10 according to the present modification, the structures of the female joints 51 and 52 and the male joints 61 and 62 are different from the structures illustrated in Figs. 1 to 8. Figs. 15 and 16 illustrate the same flow path switching valve 10 from a different viewpoint.

In the present modification, the pipe configuring the first flow path 21 is configured separately from the valve main body 14 in a component state, and is coupled to the valve main body 14 by welding, for example, at the time of assembly. The pipe part configuring the second flow path 22 is integrally configured with the valve main body 14 in a component state.

### (Third Modification)

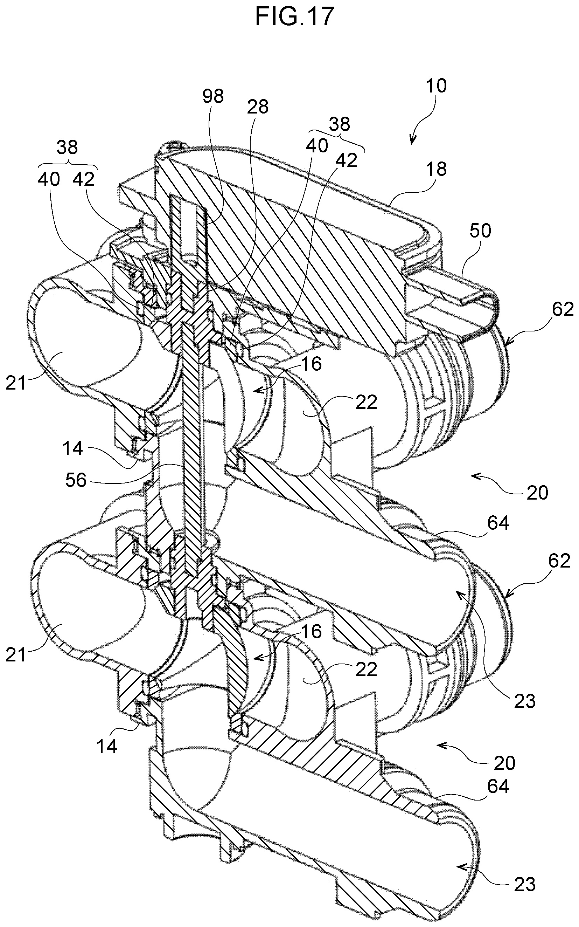

In Fig. 17, in a flow path switching valve 10 according to the present modification, in one valve unit 20 (upper valve unit), the valve shaft 28 inserted into the valve body 16 is separated from a stem 98 as an output shaft of the rotation drive part 18. A lower end of the stem 98 is inserted into the valve shaft 28. The rotation of the stem 98 is transmitted to the valve shaft 28. In the present modification, the valve shaft 28 can be shared with the valve shaft 58 of the other valve unit 20 (lower valve unit).

In the present modification, as in the second modification (Figs. 15 and 16), the pipe part configuring the first flow path 21 is configured separately from the valve main body 14 in a component state, and is coupled to the valve main body 14 at the time of assembly. In the sealing part 38 that seals between the valve body 16 and the first port 31 and the second port 32, the O-ring 42 is attached to each of an O-ring groove provided in a pipe part configuring the first flow path 21 and an O-ring groove provided in the valve main body 14.

### (Fourth Modification)

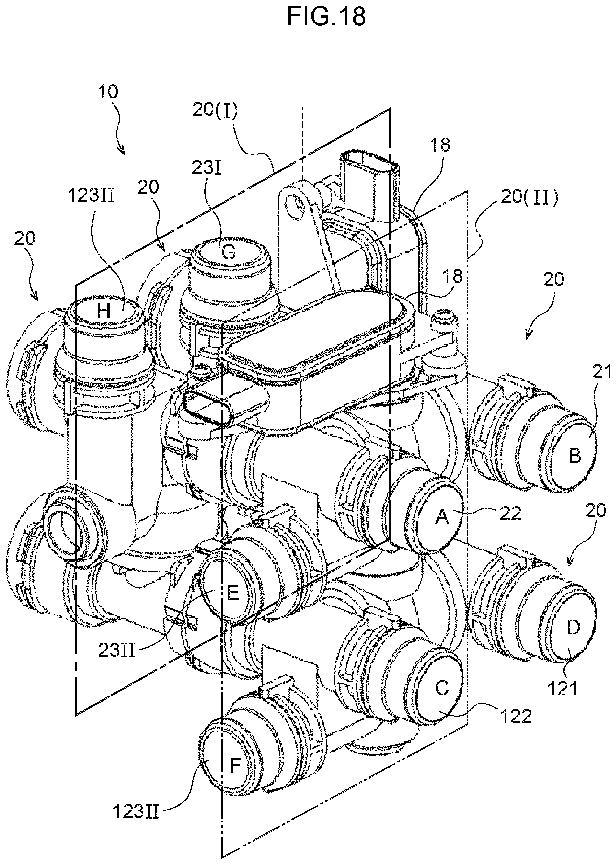

In Fig. 18, a flow path switching valve 10 according to the present modification is configured by connecting two assemblies of the valve units 20 according to the second modification (Figs. 15 and 16). The assembly of the valve units 20 is configured by stacking the two valve units 20. The two assemblies of the valve units 20 include a valve unit 20 (I) and a valve unit 20 (II) in order from the left side in Fig. 18. A portion of the valve unit 20 (I) is indicated by a one-dot chain line, and a portion of the valve unit 20 (II) is indicated by a two-dot chain line. The valve unit 20 (I) is attached to the valve unit 20 (II) by rotating by 90°. Accordingly, the positions of the rotation drive parts 18 are also different from each other.

In Fig. 18, on the rotation drive part 18 side of the valve unit 20 (II), a right side end of the second flow path is referred to as a port A, and a right side end of the first flow path is referred to as a port B. On the opposite side from to the rotation drive part 18 in the valve unit 20 (II), a right side end of the second flow path is referred to as a port C, and a right side end of the first flow path is referred to as a port D.

On the rotation drive part 18 side of the valve unit 20 (I), the third flow path is referred to as a port G. On the opposite side from the rotation drive part 18 side of the valve unit 20 (I), the third flow path is referred to as a port H.

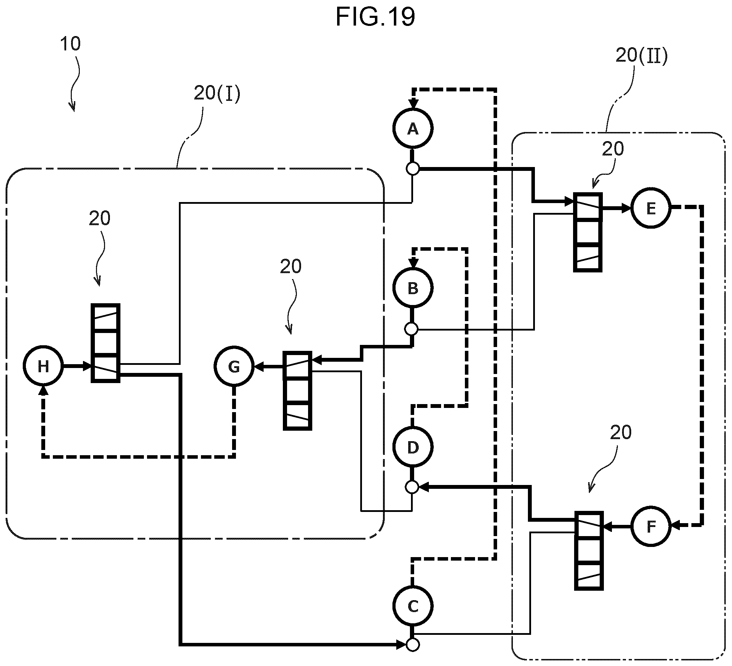

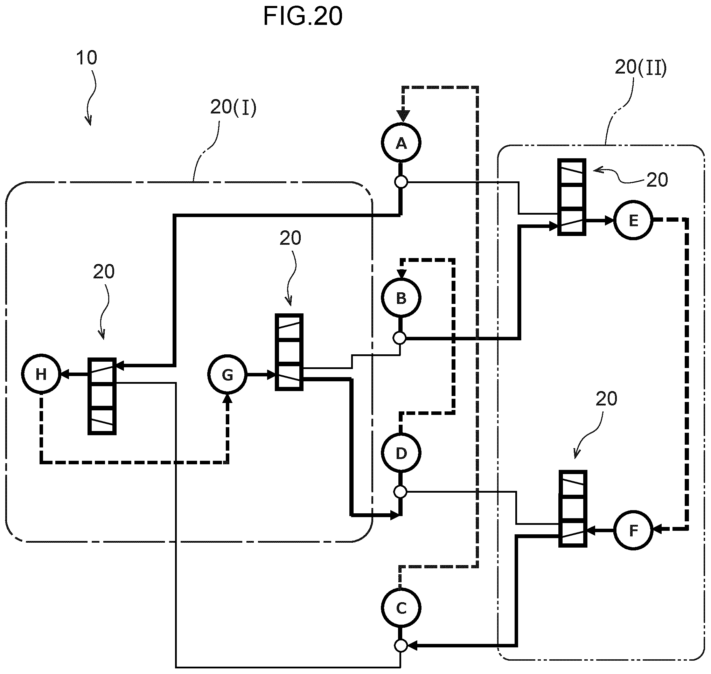

Similarly to the configuration of Fig. 4, in the valve units 20 (I) and 20 (II), when the stem 98 and the upper valve shaft 28 are rotationally driven by the rotation drive part 18, the rotation is transmitted to the lower valve shaft 58 via the connecting shaft 56, and the upper and lower valve bodies 16 rotate in synchronization with each other. In Figs. 19 and 20, solid lines indicating flows indicate flows in the valve units 20 (I) and 20 (II). The broken lines indicate flows outside the valve unit, that is, external flow paths. For the line indicating the flow, a thick line indicates a portion with flow, and a thin line indicates a portion without flow. The same applies to the following modifications.

According to the present modification, for example, two switching modes illustrated in Figs. 19 and 20 can be realized.

In a switching mode illustrated in Fig. 19, the port A communicates with the port E, and the port B communicates with the port G. The port C communicates with the port H, and the port D communicates with the port F. The ports A and H, the ports B and E, the ports C and F, and the ports D and G are blocked respectively. Other unused ports are also blocked. At this time, when the external flow paths respectively connecting the ports A and C, the ports B and D, the ports E and F, and the ports G and H are formed, a series flow path (series circuit) that returns to the port A through the ports A, E, F, D, B, G, H, and C can be configured. A heat exchanger, an evaporator, a condenser, a battery, a motor, and the like can be disposed in the external flow path.

In a switching mode illustrated in Fig. 20, the port A communicates with the port H, and the port B communicates with the port E. The port C communicates with the port F, and the port D communicates with the port G. The ports A and E, the ports B and G, the ports C and H, and the ports D and F are blocked respectively. Other unused ports are also blocked. At this time, when external flow paths respectively connecting the ports A and C, the ports B and D, the ports E and F, and the ports G and H are formed, a series flow path (series circuit) that returns to the port A through the ports A, H, G, D, B, E, F, and C can be configured.

### (Fifth Modification)

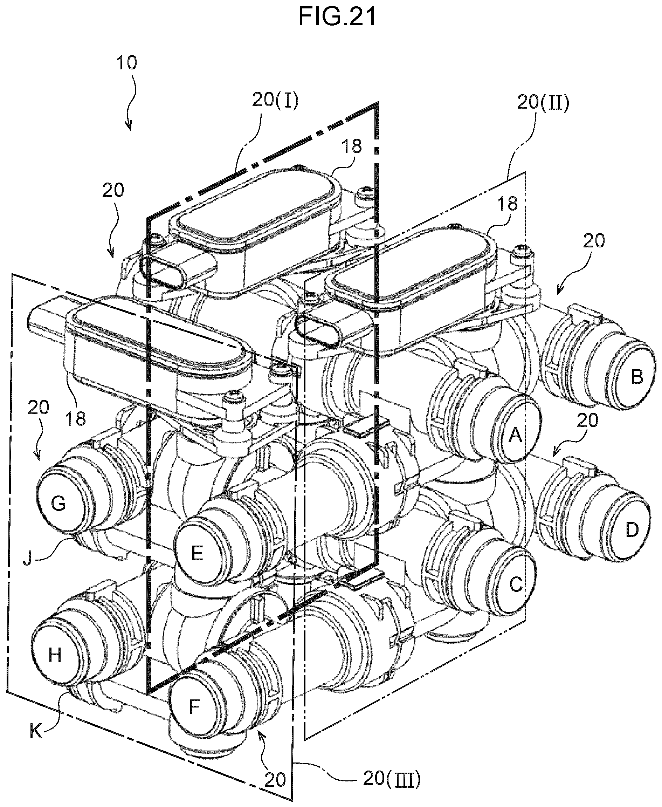

In Fig. 21, a flow path switching valve 10 according to the present modification is configured by connecting three assemblies of the valve units 20 according to the second modification (Figs. 15 and 16). The assembly of the valve units 20 is configured by stacking the two valve units 20. Among the three assemblies of the valve units 20, in the two valve units 20, the first flow paths and the second flow paths are respectively connected in series, and a valve unit 20 (I) and a valve unit 20 (II) are formed in this order from the left side in Fig. 21. The third valve unit 20 is referred to as a valve unit 20 (III). A portion of the valve unit 20 (I) is indicated by a thick one-dot chain line, a portion of the valve unit 20 (II) is indicated by a two-dot chain line, and a portion of the valve unit 20 (III) is indicated by a thin one-dot chain line. The valve unit 20 (III) is connected to the front surfaces of the valve unit 20 (I) and the valve unit 20 (II) in Fig. 21. Specifically, the third flow path of the valve unit 20 (I) and the valve unit 20 (II) are coupled to the first flow path and the second flow path of the valve unit 20 (III).

In Fig. 21, on the rotation drive part 18 side of the valve unit 20 (II), a right side end of the second flow path is referred to as a port A, and a right side end of the first flow path is referred to as a port B. On the opposite side from the rotation drive part 18 in the valve unit 20 (II), a right side end of the second flow path is referred to as a port C, and a right side end of the first flow path is referred to as a port D.

On the rotation drive part 18 side of the valve unit 20 (III), the first flow path is referred to as a port E, the second flow path is referred to as a port G, and the third flow path is referred to as a port J. On the opposite side from the rotation drive part 18 of the valve unit 20 (III), the first flow path is referred to as a port F, the second flow path is referred to as a port H, and the third flow path is referred to as a port K.

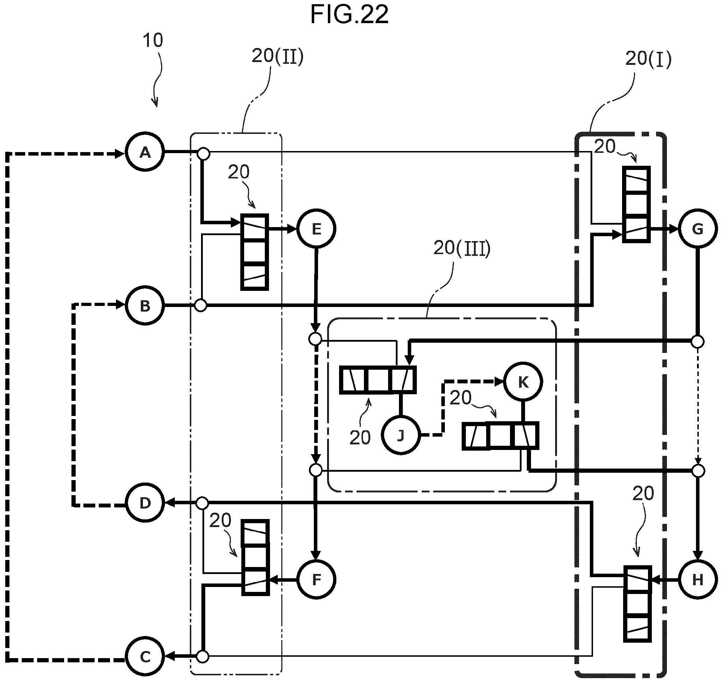

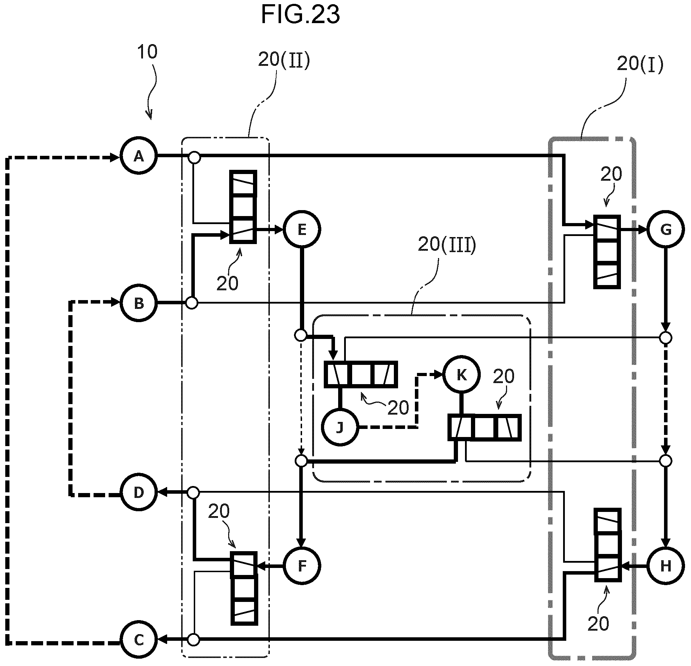

According to the present modification, for example, two switching modes illustrated in Figs. 22 and 23 can be realized.

In a switching mode illustrated in Fig. 22, the port A communicates with the port E, and the port B communicates with the port G. The port C communicates with the port F, and the port D communicates with the port H. Further, the port G communicates with the port J, and the port H communicates with the port K. The ports A and G, the ports B and E, the ports C and H, the ports D and F, the ports E and J, and the ports F and K are blocked respectively. Other unused ports are also blocked. At this time, when external flow paths respectively connecting the ports A and C, the ports B and D, the ports E and F, the ports G and H, and the ports J and K are formed, a series flow path (series circuit) returning to the port A through the ports A, E, F, and C can be configured. A series flow path (series circuit) that returns to the port B through the ports B, G, J, K, H, and D can be configured.

In a switching mode illustrated in Fig. 23, the port A communicates with the port G, and the port B communicates with the port E. The port E also communicates with the port J. The port C communicates with the port H, and the port D communicates with the port F. The port F also communicates with the port K. The ports A and E, the ports B and G, the ports C and F, the ports D and H, the ports G and J, and the ports H and K are blocked respectively. Ports that are not used are also blocked. At this time, when external flow paths respectively connecting the ports A and C, the ports B and D, the ports E and F, the ports G and H, and the ports J and K are formed, a series flow path (series circuit) returning to the port A through the ports A, G, H, and C can be configured. A series flow path (series circuit) that returns to the port B through the ports B, E, J, K, F, and D can be configured.

As described above, in the present modification, two series flow paths (series circuits) can coexist in any switching mode. The flow can be switched by the two switching modes.

### (Sixth Modification)

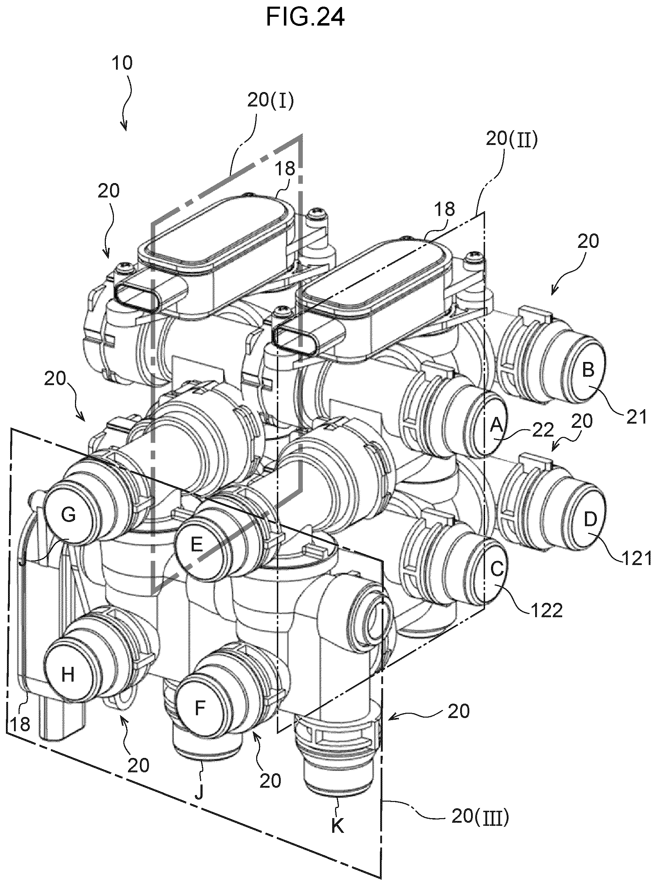

In Fig. 24, a flow path switching valve 10 according to the present modification is obtained by rotating a valve unit 20 (III) on the front side by 90° and attaching the valve unit in the fifth modification (Fig. 21). The ports A to D are similar to those in the fifth modification.

On the rotation drive part 18 side of the valve unit 20 (III), the first flow path is referred to as a port G, the second flow path is referred to as a port H, and the third flow path is referred to as a port J. On the opposite side from the rotation drive part 18 of the valve unit 20 (III), the first flow path is referred to as a port E, the second flow path is referred to as a port F, and the third flow path is referred to as a port K.

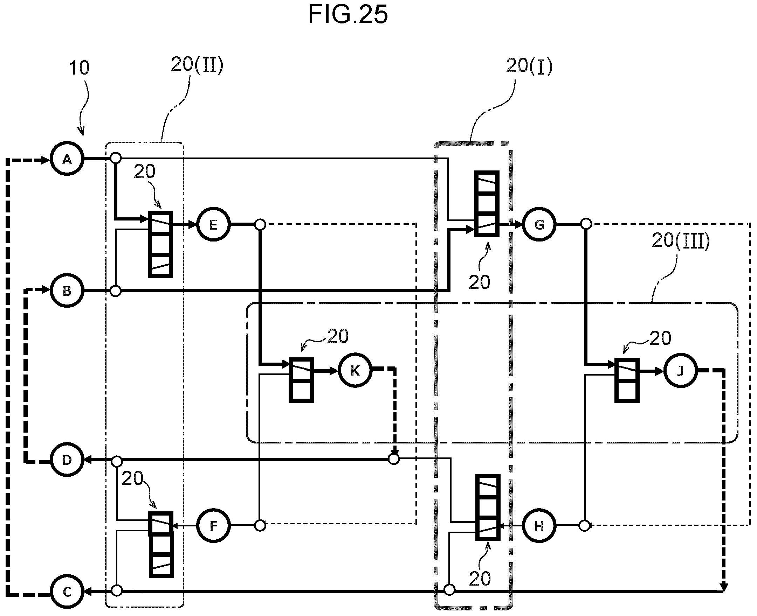

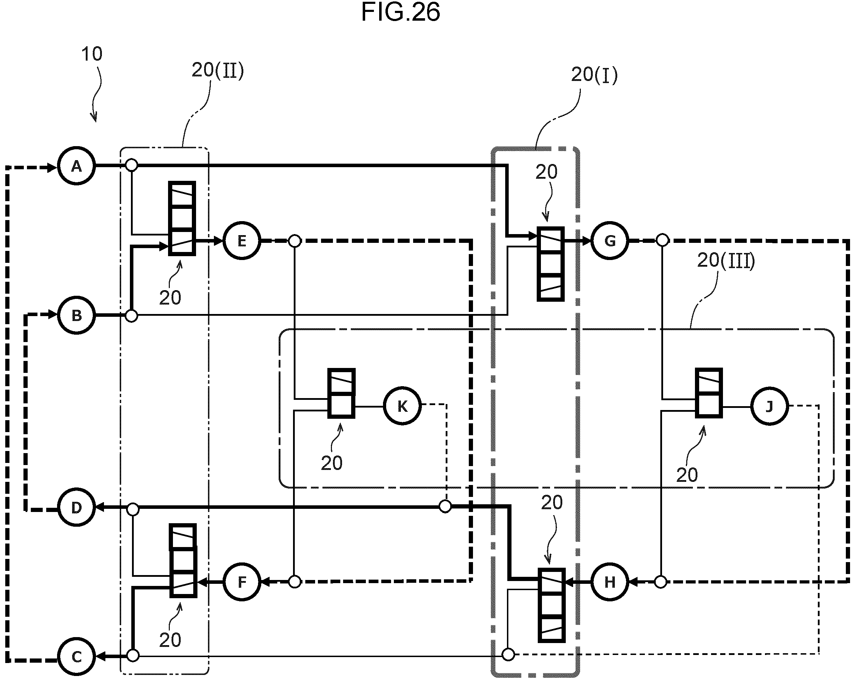

According to the present modification, for example, two switching modes illustrated in Figs. 25 and 26 can be realized.

In a switching mode illustrated in Fig. 25, the port A communicates with the port E. The port E also communicates with the port K. The port B communicates with the port G. The port G also communicates with the port J. The ports A and G, the ports B and E, the ports C and F, the ports D and H, the ports F and K, and the ports H and J are blocked respectively. Although the ports D and F communicate with each other and the ports C and H communicate with each other, the flow of each path is blocked by the valve unit (III). Other unused ports are also blocked. At this time, when external flow paths respectively connecting the ports A and C, the ports B and D, the ports C and J, the ports D and K, the ports E and F, and the ports G and H are formed, it is possible to configure a series flow path (series circuit) that returns to the port A through the ports A, E, K, D, B, G, J, and C.

In a switching mode illustrated in Fig. 26, the port A communicates with the port G, and the port B communicates with the port E. The port C communicates with the port F, and the port D communicates with the port H. The ports A and E, the ports B and G, the ports C and H, the ports D and F, the ports E and K, the ports F and K, the ports G and J, and the ports H and J are blocked respectively. Other unused ports are also blocked. At this time, when external flow paths respectively connecting the ports A and C, the ports B and D, the ports C and J, the ports D and K, the ports E and F, and the ports G and H are formed, it is possible to configure a series flow path (series circuit) that returns to the port A through the ports A, G, H, D, B, E, F, and C.

### (Seventh Modification)

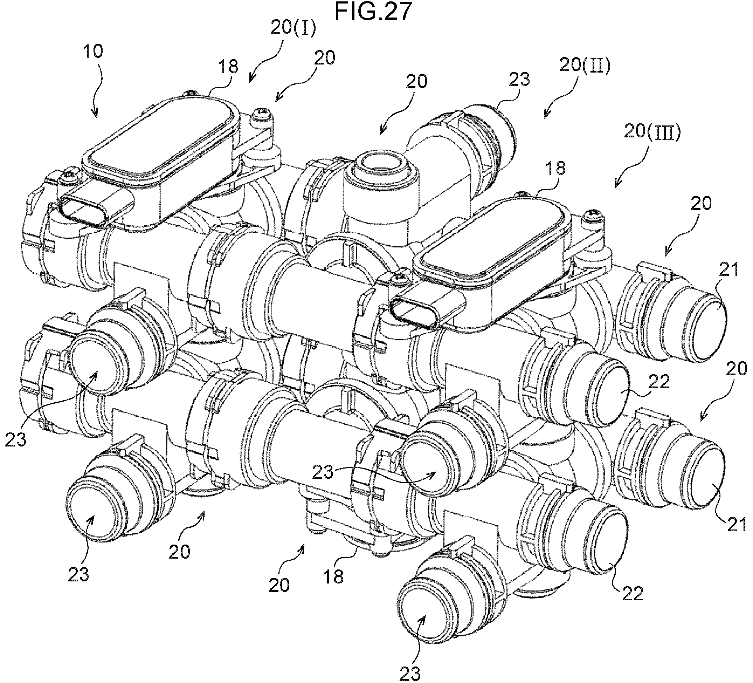

In Fig. 27, a flow path switching valve 10 according to the present modification is configured by connecting three assemblies of the valve units 20 according to the second modification (Figs. 15 and 16). The assembly of the valve units 20 is configured by stacking the two valve units 20. The two assemblies of the valve units 20 include a valve unit 20 (I), a valve unit 20 (II), and a valve unit 20 (III) in this order from the left side in Fig. 18. In the present modification, the valve unit 20 (II) is attached by rotating by 180° with respect to the valve units 20 (I) and 20 (III). In Fig. 27, the rotation drive part 18 of each of the valve units 20 (I) and 20 (III) is positioned on the upper side, whereas the rotation drive part 18 of the valve unit 20 (II) is positioned on the lower side. The direction in which the third flow path is opened is also reversed back and forth.

By combining the plurality of valve units 20 in this manner, various circuits can be realized while being compact.

### [Other Embodiments]

Although examples of the embodiments of the disclosure have been described above, the embodiments of the disclosure are not limited to the above, and it is a matter of course that various modifications can be made without departing from the gist of the disclosure in addition to the above.

The female joints 51 and 52 are respectively provided at one ends of the first flow path 21 and the second flow path 22, and the male joints 61 and 62 having a structure that is connectable to the female joints 51 and 52 is provided at another end of each of the first flow path 21 and the second flow path 22. However, such a joint structure may not be provided.

Although the concave part 23B is provided in the bent part 23A of the third flow path 23, the concave part 23B may not be provided. Although the rib 16B is formed in the flow path 36 of the valve body 16, such a configuration without the rib 16B may be adopted.

Although the first protrusion part 71 is provided at the connection part with the first port 31 in the first flow path 21 and the second protrusion part 72 is provided at the connection part with the second port 32 in the second flow path 22, either the first protrusion part 71 or the second protrusion part 72 may be provided, or the first protrusion part 71 and the second protrusion part 72 may not be provided.

Although the other valve unit 20 can be stacked at and connected to the opposite side from the rotation drive part 18 of one valve unit 20, another member may be interposed between the two valve units 20. Such connection need not be possible.

The center-to-center distance W between an end of the first flow path 21 and an end of the second flow path 22 in one valve unit 20 is equal to the center-to-center distance H (W = H) between the ends of the first flow paths 21 in the stacking direction in a state in which the other valve unit 20 is stacked at and connected to one valve unit 20, but the center-to-center distance W may be different from the center-to-center distance H. In the flow path switching valve, the valve units 20 are stacked in two stages, but may be stacked in three or more stages.

The disclosure of Japanese Patent Application No. 2022-120888 filed on July 28, 2022 is incorporated herein by reference in their entirety.

All documents, patent applications, and technical standards described in this specification are incorporated herein by reference to the same extent as if each document, patent application, and technical standard were specifically and individually indicated to be incorporated by reference.

## Claims

1. A flow path switching valve, comprising:
a valve unit including: a valve main body wherein a valve chamber is formed at an interior thereof, a first port and a second port through which a fluid respectively flows in and out are formed on a wall surface forming the valve chamber, and a third port is formed on a bottom surface of the valve chamber; a valve body disposed rotatably in the valve chamber, and in which a flow path is formed; a first flow path communicated with the first port; a second flow path provided alongside the first flow path with the valve main body interposed between the first flow path and the second flow path, and communicated with the second port; and a third flow path communicated with the third port and open at an opposite side from the third port; and
a rotation drive part connected to the valve unit and rotating the valve body such that a communication state of the first port, the second port, and the third port is switched by means of the flow path of the valve body,
wherein, at an opposite side from the rotation drive part of one valve unit, another valve unit is stackable and connectable.

2. The flow path switching valve according to claim 1, wherein a portion of the one valve unit at which the other valve unit is stacked comprises a lid that closes the valve chamber of the other valve unit.

3. The flow path switching valve according to claim 1, wherein:
the other valve unit is stacked at and connected to the one valve unit, and
the two valve bodies in the two valve units are rotated by one rotation drive part.

4. The flow path switching valve according to claim 1, wherein a center-to-center distance between an end of the first flow path and an end of the second flow path in the one valve unit is equal to a center-to-center distance between the ends of the first flow path in a stacking direction in a state in which the other valve unit is stacked at and connected to the one valve unit.

5. The flow path switching valve according to claim 1, wherein the first flow path and the second flow path of the other valve unit are respectively connectable and couplable to the first flow path and the second flow path of the valve unit.

6. The flow path switching valve according to claim 1, wherein:
a female joint is provided at one end of each of the first flow path and the second flow path, and
a male joint having a structure that is connectable to the female joint is provided at another end of each of the first flow path and the second flow path.

7. The flow path switching valve according to claim 1, wherein the third flow path has a bent part, and a spherical concave part is provided in a portion of the bent part facing the third port.

8. The flow path switching valve according to claim 1, wherein a rib extending in a direction toward the third port is formed in the flow path of the valve body.

9. The flow path switching valve according to claim 1, wherein:
a first protrusion part protruding from the first port side toward an interior of the first flow path is provided at a connection part with the first port in the first flow path, and
a second protrusion part protruding from the second port side toward an interior of the second flow path is provided at a connection part with the second port in the second flow path.

10. The flow path switching valve according to claim 1, wherein:
a sub flow path is provided at a position facing the first port in the first flow path, and
a storage tank is connectable to the sub flow path.

11. The flow path switching valve according to claim 1, wherein a pump is attachable to each of the first flow path and the second flow path.

12. The flow path switching valve according to claim 7, wherein:
a through-hole is formed at a bottom of the concave part, and
the through-hole is closed by a closing part including a temperature sensor.
